# EUROPEAN PATENT APPLICATION

(11) **EP 4 398 185 A1**
(43) Date of publication of application: **10.07.2024**
(21) Application number: 23290002.7
(22) Date of filing: 05.01.2023
(51) Int. Cl.: G06T 3/40, G06T 7/50

(54) **METHOD FOR IMAGE PROCESSING**

(71) Applicant: Beijing Xiaomi Mobile Software Co., Ltd., Beijing 100085 (CN)
(72) Inventor: Moschetti, Giuseppe, 92100 Boulogne-Billancourt (FR); Veit, Thomas, 92100 Boulogne-Billancourt (FR); Massip, Pierre, 92100 Boulogne-Billancourt (FR)
(74) Representative: dompatent von Kreisler Selting Werner - Partnerschaft von Patent- und Rechtsanwälten mbB

(57) **Abstract**

Method for image processing, preferably implemented in a camera device, including capturing an image; acquiring focusing information indicating the focus distance of the image; providing the image and the focusing information to a superresolution neural network, and generating a super resolved image.

## Description

The present invention relates to a method for image processing and in particular generation of super resolved images by a superresolution neural network (SRNN). Further, the present invention relates to a method for training a SRNN, a device implementing the SRNN and a software storage device.

Image quality in recent smartphones had improved a lot in last decades, to perform at best and get some zoom capabilities as DSLR cameras, smartphone . manufacturer started to have several optical modules (wide angle to tele). To reach very high digital zoom, numerical solutions are required. Classical interpolation methods like bicubic interpolation or the like, tend to provide blurry low perceptual quality results.

Super Resolution (SR) solution aims to increase the image resolution by reducing the images sampling step, i, e. inferring frequencies beyond the Nyquist limit of the sensor and also to deblur/sharpen the frequencies below the Nyquist limit. Therein, SR solutions shall keep the natural effect in the picture, i.e. to conserve the blur and sharpness variation due to the varying depth in the image. Thus, it is intended to provide a digitally enhanced image that is as close as possible to what would be provided by an optical zoom.

H. Shi, J. Jiang, J. Yao and Z. Xu, "Single Image Super-Resolution Using Depth Map as Constraint," 2020 IEEE International Conference on Image Processing (ICIP), 2020, pp. 538-542, uses a depth map as a constraint for the deep learning super resolution.model. In this work the depth map is used only to classify the distance of various regions of the image and process each distance range in the same way to get coherent result. The depth map does not provide the information of which part of the image is in the focus, as the focus could be done automatically by the device or manually by the user. However, considering only the depth map is prone to artefacts and may create unrealistic results.

It is an object of the present invention to provide a method for creating an SR image having a realistic blur.

The object is solved by a method for image processing according to claim 1, a method for training a superresolution neural network (SRNN) according to claim 2, a device according to claim 10 and a software storage device according to claim 12.

In an aspect of the present invention, a method for image processing is provided. Therein, the method is preferably implemented in a camera device. The method includes:
Capturing an image;
Acquiring focusing information indicating the focus distance of the image;
Providing the image and the focusing information to a superresolution neural network (SRNN) and generating a super resolved (SR) image.

In a first step an image is captured. Therein, the image may be captured by a camera sensor of the camera device. Alternatively, the image is transferred to the implementing device via a data connection and captured by a terminal or another device, for example.

In a second step focusing information is acquired for the image. Therein, the focusing information indicates the focusing distance of the image or the focus point of the image, i.e. everything in the scene which is at this distance from the device will be sharp, the farther you are from that point the more blur it will be.

The image and the focusing information are provided to a superresolution neural network (SRNN) to generate a super resolved (SR) image.

Hence, according to the present invention, the focusing information is used in order to generate the SR image. Therein, objects in the image, which are out of focus can be identified by the focusing information and can be blurred in order to provide a natural appearance of the SR image. Thus, by considering the focusing information known from the capturing device, i.e. the camera device, accuracy of the blur in the SR image can be increased and artefacts can be reduced.

Preferably, a depth map is provided including depth information of the image, wherein the depth map is provided to the SRNN. Therein, the depth map may indicate depth of areas or the distance from the capturing device for areas and/or objects in the image. Thereby, by the depth map areas of the image having same or similar distance to the capturing device are treated similar when applying blur. Hence, by the depth map consistency of the bokeh effect can be maintained.

Preferably, the depth map is determined by one or more of a convolutional neural network (CNN) which is trained to identify those objects in the image having the same distance to the capturing device. Alternatively or additionally, stereo images are used in order to determine the distance of the respective objects or areas in the image from the capturing device. Alternatively or additionally, a time-of-flight sensor, a LIDAR or any other ranging sensor can be used in order to determine the distance of the objects in the image from the capturing device in order to determine the depth map.

Preferably, the focusing information is provided by the lens position of the camera device or capturing device. Thus, by detecting the lens position of the camera device, reliable information about the focus point or focus distance can be acquired with certainty.

Preferably, the depth map and the focusing information are merged to generate a blur map and the blur map is provided to the SRNN. Therein, the blur map indicates the blur in the SR image and is used by the SRNN to generate natural apparent blur in the SR image. Thus, information from the focusing information and information of the depth map are combined. Therein, the blur map may have a resolution similar or identical to the resolution of the image. Further, the blur map may contain absolute values indicating the amount of blur applied to the corresponding pixels or areas of the image in the SR image.

Preferably, the blur in the SR image is dependent on a distance to the focus point of the image. The farther away an object or area in the image from the focus point is, the more blur is applied to this area. The closer the objects or areas are to the focus point, the less blur is applied such that these objects or areas appear sharp and in-focus.

Preferably, the blur map contains absolute blur values, wherein the blur values are proportional to the distance to the focus point.

Preferably, the focusing information and/or the blur map is modified by a user or an input parameter before providing the respective focusing information or blur map to the SRNN. Hence, by modifying the focusing information or the blur map it is for example possible to achieve images which appear like being captured with a camera having a larger aperture. Thus, in particular the depth of field can be adapted by modifying the focusing information or blur map, i.e, increasing or decreasing the proportionality of the absolute values in the blur map,

In another aspect of the present invention a method for training a superresolution neural network (SRNN) is provided. The method includes
Acquiring an image as ground truth image preferably by a camera device;
Acquiring focusing information of the image indicating the focus distance of the image;
Downsampling the image to create a low resolution, LR, image having a resolution lower than the ground truth image;
Providing the LR image and the focusing information to the SRNN to be trained and generating a super resolved, SR, image;
Comparing the SR image of the SRNN to be trained with the image and adapting the SRNN for training.

Therein, preferably the aforementioned method steps are repeated for a plurality of acquired images, wherein for each image an SR image is created by the SRNN to be trained in order to minimize the difference between the SR image generated of the SRNN to be trained with the image provided as ground truth image. Thus, the SRNN is trained to maintain the initial blur of the ground truth image. In particular, the difference between the SR image of the SRNN to be trained and the image provided as ground truth image is determined by a loss function. Hence, training is carried out and the SRNN for training is adapted in order to minimize the loss function.

Preferably, blur is at least partially applied to the image when downsampling to preserve the initial blur of the ground truth image during the step of downsampling. Therein, the blur can be applied according to a blur kernel corresponding to known blur of the camera device or capturing device which has acquired the image used as ground truth image. Thus, due to knowledge of the blur kernel it is possible to simulate the blurring of the capturing device and the LR image has a blur corresponding to the blur of the image with high accuracy. Therein, the blurred LR image is used as input of the SRNN to be trained with. Hence, natural blurring in accordance with the provided blur kernel can be achieved by the SRNN when trained.

Further, the method for training the SRNN is preferably built along the features as described with respect to the method for image processing above.

In another aspect of the present invention a device is provided comprising a processor and memory, wherein the memory stores instructions, which when executed by the processor, carry out the steps of the method described before.

Further, the device comprises an image sensor to capture the image. Therein, in particular the image sensor comprises a moveable lens in order to change the focus distance of the image sensor.

Preferably, the device is a terminal such as a smartphone, tablet, camera or the like.

In another aspect of the present invention, a software storage device is provided storing instructions which when executed by a processor carry out the steps of the methods described before.

In the following the present invention is described in more detail with reference to the accompanying figures.

The figures show:
Figure 1 a schematic flow diagram of the method according to the present invention,
Figure 2 a schematic diagram of the embodiment of the present invention,
Figure 3 a schematic flow diagram of the training according to the present invention,
Figure 4 a schematic diagram regarding an embodiment of the present invention,
Figures 5A to 5C an example of the present invention in comparison with results of the prior art,
Figure 6 a device according to the present invention and
Figure 7 a device according to the present invention.

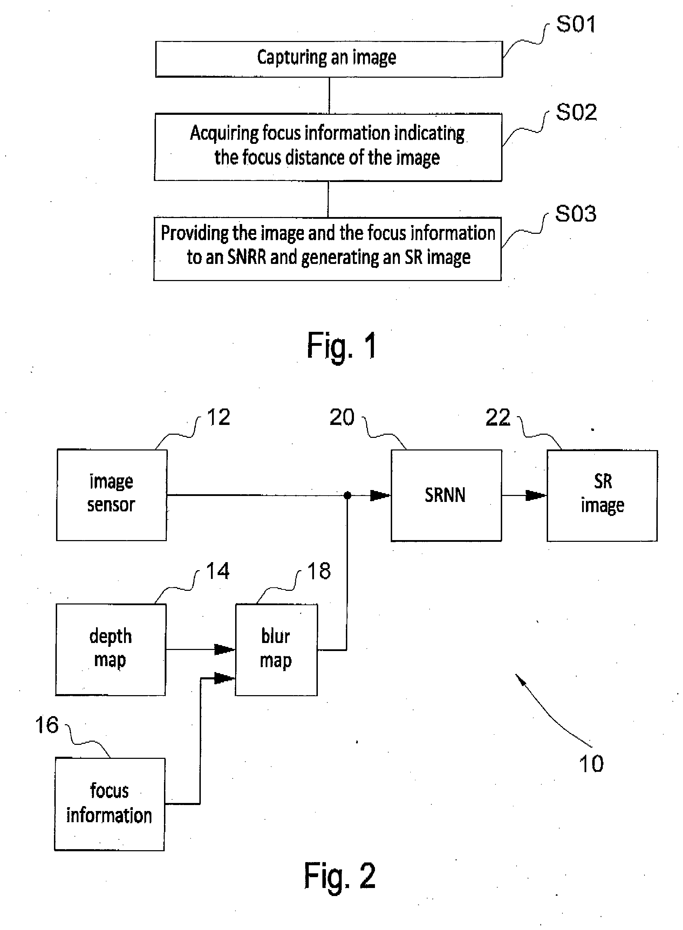

According to the present invention a method for image processing is provided preferably implemented in a camera device. Therein, the method generates a super resolved (SR) image by a superresolution neural network (SRNN). According to Figure 1 in step S01, an image is captured preferably by the image sensor of the camera device. In step S02, focusing information is acquired wherein the focusing information indicates the focus distance of the image captured in step S01. In step S03, the image and the focusing information are provided to a superresolution neural network, SRNN, wherein the SRNN generates a super resolved, SR, image

Thus, a realistic effect with the super resolution process is achieved, i.e. conserve the focused area of the image sharp, and conserve the blurred background.

If the camera device is acquiring the image, the lens position and therefore the distance of the scene that is in focus is known. By merging information from the auto focus (AF) and the depth map one can identify the regions in the image that are in the focus and the one that are not in focus. The information is provided to the SRNN in order to constraint the digitally zoomed image to conserve the same blur. In other words, the focusing information is provided to the SRNN to help the model to handle the strength of deblurring to attain the expected blur.

In the present invention there are three kind of inputs:
- an image: it can be a raw or RGB image
- a depth map: which can come from several source (computed from single image with a dedicated CNN, from a couple of stereo images, or from a time of flight sensor)
- focusing information: for the lens position that is known in order to determine the focus distance.

The blur or the sharpness depend on the difference between the object distance and the focus distance. If an object is closer or farther away than the focus distance it will appear blurred. The larger the difference from the focus distance the more important/pronounced the image blur. Therefore, the focusing information and the depth map can be merged together to provide a blur map that is related to the blur in the generated SR image.

The SRNN will receive as input an image ('low resolution'), and the blur map of the relative blur. The neural network will provide as output an image with higher resolution (super resolved). The SR image will have higher frequency details with a blur which respects the blur map provided as input.

The situation is depicted in Figure 2. By an image sensor 12 an image is captured. Therein, the captured image may have a resolution lower than the resolution of the SR image 22 generated by the SRNN 20. In order to generate the SR image 22 a depth map 14 is provided which is combined with the focusing information 16 into a blur map 18. The blur map 18 is provided to the SRNN 20 in order to realistically generate blur in the S_{R} image 22. The blur map 18 will provide a map with zeros at the focus area and the values will grow in absolute value, when it moves away from the focus distance. It is also possible to artificially amplify the distance values of the blur map which could allow to modulate the foreground and background blur. Modulating the blur per each area of the image, allow to conserve or add the bokeh effect, simulating a photo taken with a lens with a larger aperture.

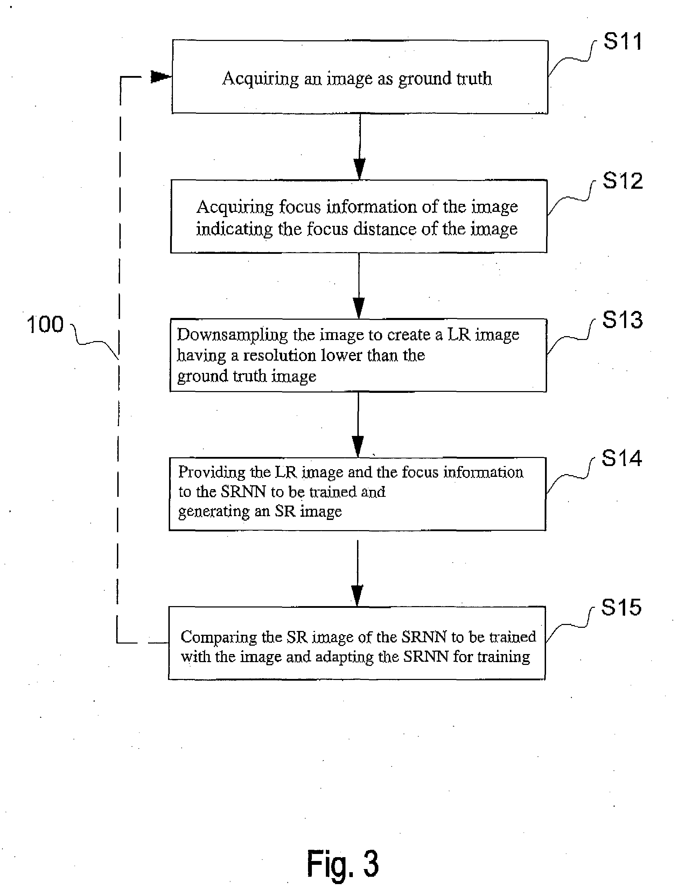

Referring to Figure 3 showing a schematic flow diagram of the training of the SRNN. In particular the SRNN when trained corresponds to the SRNN 20 of the method described with reference to figures 1 and 2. The method for training the SRNN includes the following:
In step S11, an image as ground truth image is acquired preferably by a camera device.

In step S12, focusing information is acquired of the image indicating the focus distance of the image.

In step S13, the image is downsampled in order to create a low resolution (LR) image. Therein the LR image is a low resolution version of the ground truth image.

In step S14, the LR image and the focusing information is provided to the SRNN to be trained to generate a SR image.

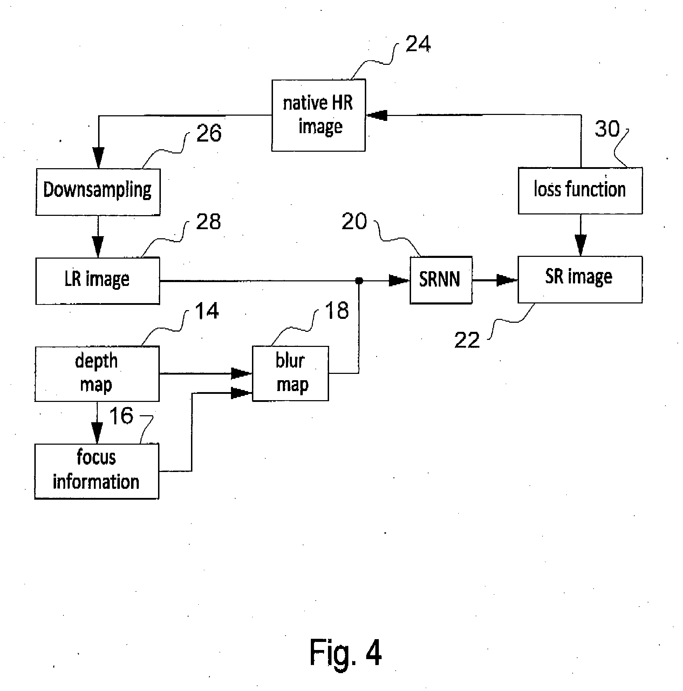

In step S15, the SR image generated by the SRNN to be trained is compared with the acquired image of the ground truth image, wherein based on the comparison the SRNN to be trained is adapted for training. In particular, comparison can be performed by a loss function 30 (see figure 4) for training. Similar to the method for image processing described before with respect to Figures 1 and 2, also a depth map can be provided to the SRNN to be trained in order to generate the SR image. Therein, as indicated by the arrow 100, the process is repeated with a plurality of different images as ground truth and/or different blurs until the difference between the generated SR image and the ground truth image is minimized.

The training is schematically depicted in Figure 4 wherein a native HR image 24 is provided which is downsampled in a downsampling step 26. The resulting LR image 28 is a low resolution version of the native HR image 24. The LR image 28 is provided to the SRNN 22 together with the depth map 14 and the focusing information 16 which can be combined in a blur map 18 as described before in particular with respect to Figure 2. The SRNN 20 generates an SR image 22. The native HR image 24 as ground truth image is compared to the generated SR image 22 by a loss function 30. On the basis of the loss function 30, the SRNN 20 is adapted to minimize the loss function 30. Therein, the native HR image 24 may contain already blur. Before, during or after the downsampling 26 blur can be at least partially applied to the native HR image 24 in order to generate the LR image 28 having blur that corresponds to the blur of the HR image 24 and is not distorted by the downsampling step. Therein, the HR image including blur is used as ground truth image when comparing with the SR image 22 generated by the SRNN 20. Therein, blurring of the native HR image 24 can be applied by a blur kernel which can synthesize the blur provided by the capturing device such as a smartphone or terminal.

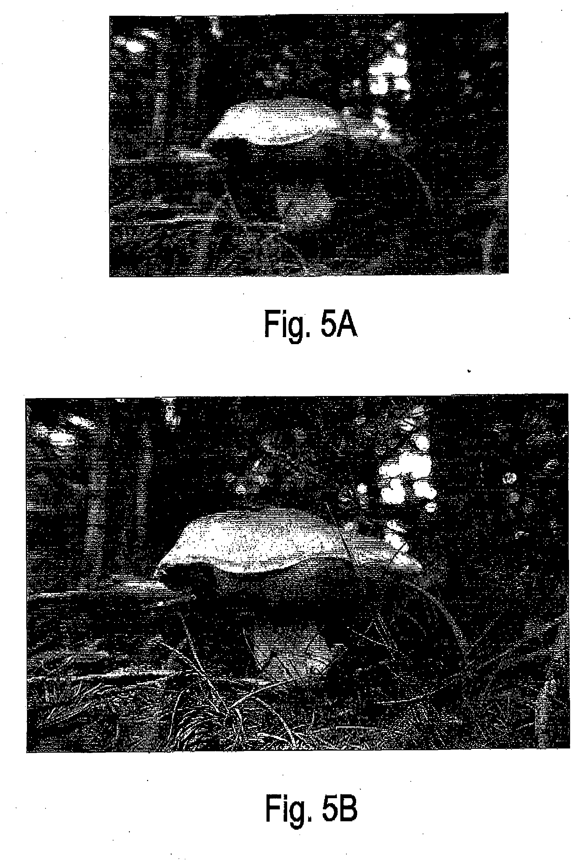

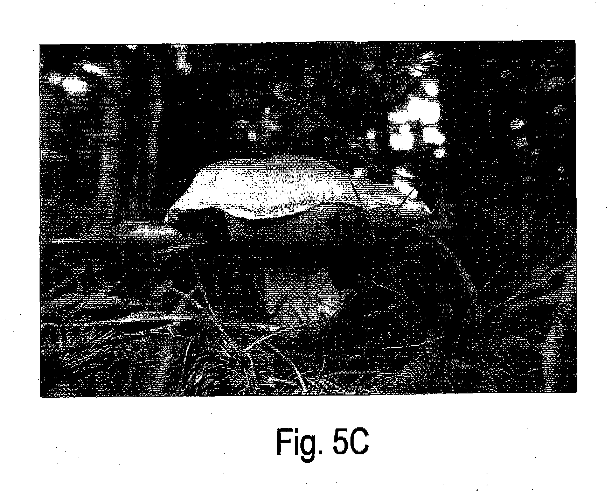

Referring to the Figures 5A to 5C. Figure 5A shows an example of an LR image. Figure 5C shows the SR image which was generated according to the present invention having a natural appearance of blur in the background. In comparison, Figure 5B shows an SR image generated in a conventional manner. As clearly seen in Figure 5B, artefacts in the background are visible and regions out of focus are excessively sharpen providing an unnatural appearance,

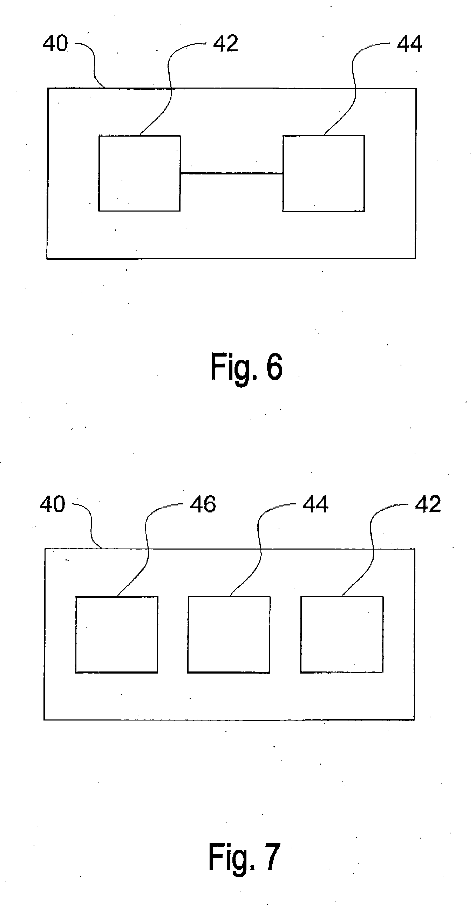

Referring to Figure 6 showing a device implementing the method described before. Therein, the device may be a smartphone or terminal. The device 40 comprises a processor 42 and a storage device 44. Therein, the processor 42 may be a dedicated image processor or may be the main processor of the device 40 controlling main functionality of the device 40. Therein, the image and the focusing information are acquired from the storage device 44 and processed by the processor 42 as described before with reference to the methods,

Referring to Figure 7 showing a device 40' comprising a processor 42 and a storage device 44 similar to the device 40 of Figure 5. In addition, the device 40' in Figure 6 comprises an image sensor 46. Therein, the image sensor 46 may comprise at least one lens and in particular a moveable lens in order to change the focus point of the image sensor 46. Therein, by the position of the lens, focusing information can be determined which is used in order to generate the SR image.

## Claims

1. Method for image processing, preferably implemented in a camera device, including
Capturing an image;
Acquiring focusing information indicating the focus distance of the image;
Providing the image and the focusing information to a superresolution neural network, SRNN, and generating a super resolved, SR, image.

2. Method for training a superresolution neural network, SRNN, including
Acquiring an image as ground truth image preferably by a camera device;
Acquiring focusing information of the image indicating the focus distance of the image;
Downsampling the image to create a low resolution, LR, image having a resolution lower than the ground truth image;
Providing the LR image and the focusing information to the SRNN to be trained and generating a super resolved, SR, image;
Comparing the SR image of the SRNN to be trained with the image and adapting the SRNN for training.

3. Method according to claim 2, wherein blur is at least partially applied to the image when downsampling to preserve the blur of ground truth image in the LR image.

4. Method according to any of claims 1 to 3, wherein a depth map is provided including depth information of the image, wherein the depth map is provided to the SRNN.

5. Method according to claim 4, wherein the depth map is determined by one or more of a convolutional neural network, CNN, stereo images and a time-of-flight, ToF, sensor.

6. Method according to any of claims 1 to 5, wherein the focusing information is provided by lens position of the camera device.

7. Method according to any of claims 4 to 6, wherein the depth map and the focusing information are merged to generate a blur map and the blur map is provided to the SRNN, wherein the blur map indicates the blur in the SR image.

8. Method according to any of claims 1 to 7, wherein blur in the SR image is dependent on a distance to a focus point of the image,

9. Method according to any of claims 1 to 8, wherein the focusing information and/or the blur map is modified by a user or an input parameter before providing to the SRNN.

10. Device comprising a processor and a memory, wherein the memory stores instructions which, when executed by the processor, carry out the steps of the method according to claim 1 to 9.

11. Device according to claim 10, further comprising an image sensor to capture the image.

12. Software storage device storing instructions which when executed by a processor carry out the steps of the methods according to any of claims 1 to 9.
